# FASCICULE DE BREVET EUROPEEN

(11) **EP 2 003 256 B1**
(45) Date de publication et mention de la délivrance du brevet: **28.03.2018**
(21) Numéro de dépôt: 08305247.2
(22) Date de dépôt: 11.06.2008
(51) Int. Cl.: E03B 7/07, G01F 15/14, G01F 15/18, H02B 1/03, E03B 9/08, E03B 7/09

(54) **Boitier pour ensemble de comptage d'adduction d'eau**
Gehäuse für Zählereinheit der Wasserzuführung
Case for a water conveyance metering assembly

(30) Priorité: 13.06.2007 FR 0755748
(43) Date de publication de la demande: 17.12.2008
(73) Titulaire: SAINTE LIZAIGNE SA, 36260 Sainte Lizaigne (FR)
(72) Inventeur: Verhee, Damien, 36100 Issoudun (FR)
(74) Mandataire: Jacobacci Coralis Harle

(56) Documents cités:
- EP-A- 0 653 610
- FR-A- 2 798 182
- FR-A- 2 800 401
- GB-A- 2 186 338
- GB-A- 2 244 812
- GB-A- 2 354 569

## Description

L'invention concerne un boîtier pour ensemble de comptage d'adduction d'eau. Elle a des applications dans le domaine du génie civil et plus particulièrement de l'adduction d'eau chez des utilisateurs.

Les compteurs de consommation d'eau chez des utilisateurs doivent être relevés régulièrement afin de pouvoir facturer lesdits utilisateurs. Cela suppose qu'ils soient facilement accessibles et c'est donc pour cela qu'ils sont en général placés à l'extérieur ou en limite de propriété. Dans ces conditions les compteurs sont soumis aux agressions de l'environnement et notamment climatique avec le risque de gel et c'est pour cela qu'on les place dans des boîtiers. Dans les régions où le risque de gel existe, on est conduit à mettre en oeuvre des boîtiers enterrés (regard de comptage) ou semi-enterrés (borne de comptage) renfermant des ensembles de comptage afin de profiter de l'inertie thermique du sol. Dans d'autres régions où un tel risque est inexistant, le boîtier peut rester complètement à l'extérieur (coffret de comptage), ce qui réduit/supprime les terrassements nécessaires à la mise en place.

Il en résulte que divers types de boîtier doivent être prévus avec des formes et structures différentes. Les procédés de fabrication de ces différents boîtiers sont différents ce qui élève les coûts de fabrication car chaque type de boîtier est produit en moindre quantité et avec des outils propres.

Il est donc souhaitable de rationaliser la structure des boîtiers afin de pouvoir mettre en oeuvre des équipements de production qui soient en grande partie ou totalité communs pour les divers types de boîtiers. Il est également souhaitable que la réalisation soit simplifiée notamment pour réduire des coûts de construction et/ou de main d'oeuvre. De plus, les boîtiers doivent assurer une protection adéquate à l'ensemble de comptage vis-à-vis de l'environnement et notamment du gel.

On connaît des boîtiers pour ensemble de comptage d'adduction d'eau par les documents EP0653610, FR2800401, FR2798182, GB2244812, GB2354569 ou GB2186338.

La présente invention a notamment de tels buts et concerne un boîtier pour ensemble de comptage d'adduction d'eau, l'ensemble de comptage étant destiné à être relié en amont à une conduite amont arrivant dans le boîtier et en aval à une conduite aval repartant du boîtier, les conduites arrivant et repartant par l'extrémité inférieure du boîtier.

Selon l'invention, le boîtier est constitué d'une coque externe tubulaire d'une pièce obtenue par extrusion d'une matière plastique et d'un revêtement isolant interne sensiblement rigide en matière isolante, plaqué contre la coque et en deux parties accolées et glissées dans ladite coque, l'ensemble de comptage et les conduites pouvant être maintenus entre-eux par fixation sur une platine rigide immobilisée dans le boîtier, ladite platine étant maintenue en place dans l'isolant du boîtier par insertion de sa tranche périphérique dans une gorge étendue sur les deux parties du revêtement isolant vers l'intérieur du boîtier.

Dans divers modes de mise en oeuvre de l'invention, les moyens suivants pouvant être utilisés seuls ou selon toutes les combinaisons techniquement possibles, sont employés :
- le revêtement isolant interne est collé ou soudé ou clipsé ou encliqueté à la coque externe,
- la périphérie de la platine est collée dans la gorge,
- la section périphérique de la coque tubulaire est sensiblement carrée,
- la section périphérique de la coque tubulaire est sensiblement rectangulaire,
- la section périphérique de la coque tubulaire comporte des coins arrondis,
- la coque comporte au moins un relief en creux ou en saillie destiné à améliorer un éventuel ancrage dudit boîtier notamment dans une maçonnerie,
- le boîtier est globalement parallélépipédique,
- le boîtier est globalement pyramidal tronqué,
- la gorge est formée par l'espace en retrait entre deux saillies internes parallèles du revêtement isolant,
- l'épaisseur de la matière isolante est globalement constante le long de la coque, (sauf au niveau de la gorge et/ou des saillies)
- l'épaisseur de l'isolant au niveau de la gorge est sensiblement identique à celle de l'isolant en dehors des saillies le long de la coque,
- la platine est une structure pleine, (pas de communication entre ses deux faces principales supérieure et inférieure sauf pour orifices de passage des conduites)
- la platine est une structure en nid d'abeille, (ou grille, il y a communication aérique entre les deux faces principales supérieure et inférieure de la platine)
- la platine est dans une matière plastique injectée,
- la platine comporte au moins deux orifices sensiblement verticaux pour passage des conduites, (les conduites sont soit les conduites provenant directement du sol, soit des cannes destinées à être reliées aux conduites du sol)
- la conduite est fixée à la platine par enfoncement dans le passage correspondant d'une bague conique enserrant la conduite,
- le boîtier est un coffret hors sol, l'extrémité inférieure du boîtier étant fermée par un fond rapporté, le revêtement isolant des deux parties accolées étant étendu sur l'ensemble du fond (de préférence sensiblement à son contact),
- le fond et le revêtement isolant attenant comportent des pré-découpes de passage de conduites, (il suffit de forcer les parties prédécoupées pour les retirer du fond et ainsi libérer le passage aux conduites)
- le fond et le revêtement isolant attenant comportent des ouvertures de passage de conduites,
- le fond est dans la même matière que la matière de la coque externe,
- le fond est dans une matière plastique thermoformée,
- le boîtier est une borne de comptage et le boîtier se poursuit vers le bas par un pied destiné à venir dans le sol, la coque étant allongée vers le bas pour former ledit pied et le revêtement interne se poursuivant au moins en partie dans ledit pied,
- l'accès à l'intérieur du boîtier se fait latéralement, l'extrémité supérieure du boîtier étant fermée par un chapeau, le revêtement isolant des deux parties accolées étant étendu sous l'ensemble du chapeau (de préférence sensiblement à son contact), au moins une ouverture étant réalisée sur une face latérale dudit boîtier, ladite ouverture étant fermée par une porte amovible comportant intérieurement une épaisseur de matière isolante et extrérieurement une paroi de porte,
- le chapeau est dans la même matière que la matière de la coque externe,
- le chapeau est dans une matière plastique thermoformée,
- le chapeau est collé ou soudé ou clipsé ou encliqueté sur le boîtier,
- l'épaisseur de matière isolante et la paroi de porte de la porte sont accolées,
- l'épaisseur de matière isolante et la paroi de porte de la porte sont collées ou soudées ou clipsées ou encliquetées ensembles,
- la paroi de porte est dans la même matière que la matière de la coque externe,
- la paroi de porte est dans une matière plastique thermoformée,
- la porte est montée sans charnière sur le boîtier,
- la partie inférieure de la porte est située au-dessus de la gorge et de la platine s'y insérant,
- le boîtier comporte deux portes, une sur chacune de deux faces latérales opposées du boîtier,
- le boîtier est un regard de comptage destiné à être enterré et le boîtier se poursuit vers le bas par un pied, la coque étant allongée vers le bas pour former ledit pied et le revêtement isolant interne se poursuivant au moins en partie dans ledit pied,
- l'accès à l'intérieur du boîtier regard de comptage se fait par le dessus, une première trappe amovible étant disposée à l'extrémité supérieure de la coque et une seconde trappe amovible réalisée dans la matière isolante,
- la première et la seconde trappes sont séparées par un espace,
- la première et la seconde trappes sont accolées et solidaires ensembles, l'accès se faisant par le retrait commun desdites trappes,
- le revêtement isolant est constitué d'une matière isolante moulée,
- la matière isolante est du polystyrène expansé,
- des zones du boîtier (dont : fond, couvercle, pied... plus généralement toute partie le composant et l'éventuel revêtement isolant attenant) comportent des pré-découpes de passage de conduites, (il suffit de forcer les parties prédécoupées pour les retirer et ainsi libérer le passage aux conduites)
- le boîtier est livré pré-monté,
- le boîtier est livré pré-monté et pré-câblé. (un ensemble de comptage étant installé sur la platine)

La présente invention, sans qu'elle en soit pour autant limitée, va maintenant être exemplifiée avec la description qui suit en relation avec les figures suivantes, de plusieurs modes de réalisation:
la Figure 1 qui représente une vue éclatée d'une borne de comptage selon l'invention,
les Figures 2 et 3 qui représentent deux vues en coupe verticale de la borne de comptage de la Figure 1,
le Figure 4 qui représente une vue en coupe horizontale de la borne de comptage de la Figure 1 au niveau d'une porte d'accès avec un cartouche détaillant les relations entre la porte et le corps de la borne,
la Figure 5 qui représente une variante à deux portes de la borne de comptage de la Figure 1,
la Figure 6 qui représente une vue semi-transparente en perspective d'un regard de comptage,
la Figure 7 qui représente une vue en coupe du regard de la Figure 6,
la Figure 8 qui représente un coffret de comptage,
la Figure 9 qui représente une platine, et
les Figures 10A et 10B qui représentent respectivement une vue perspective et une vue latérale d'une bague de serrage de conduite.

L'invention peut être déclinée de plusieurs manières et il va être présenté dans l'ordre une borne de comptage, un regard de comptage et un coffret de comptage. Ces différents exemples ont en commun d'être constitués d'un boîtier qui comporte extérieurement une coque obtenue par extrusion d'une matière plastique et qui est tubulaire et, intérieurement, au contact de la coque, d'un revêtement isolant obtenu par moulage qui s'étend plus ou moins en hauteur en fonction du mode de réalisation. De plus, un moyen de maintien d'un ensemble de comptage à type de platine support est maintenu dans une gorge du revêtement isolant intérieur ce qui évite tout pont thermique avec la coque et l'extérieur et améliore ainsi l'isolation. Pour permettre la mise en place de la platine, le revêtement isolant interne est en deux parties qui sont finalement accolées puis glissées dans la coque. Enfin, pour accéder au compteur, une/des trappes (accès par le dessus) ou une/des portes (accès frontal avant et/ou arrière selon pose et modèle) elles-mêmes isolées, sont mises en oeuvre selon le mode de réalisation.

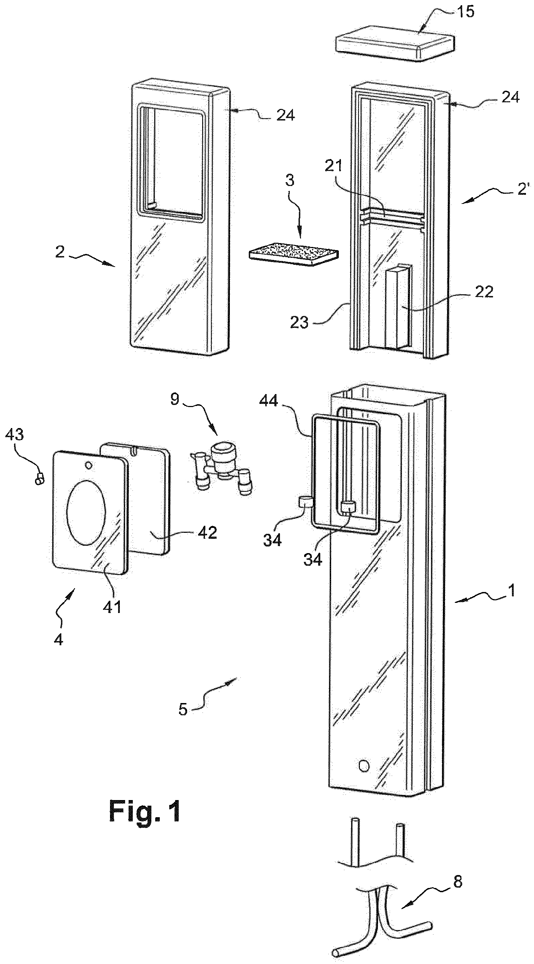

Sur la Figure 1, une borne de comptage 5 comporte une coque 1 tubulaire allongée vers le bas pour former un pied qui est destiné à venir dans le sol et un revêtement isolant intérieur en deux parties, avant 2 et arrière 2'. Les deux parties 2 et 2' sont destinées à venir au contact l'une de l'autre et ces parties en contact comportent des reliefs complémentaires destinés notamment à augmenter le trajet de l'air en cas de mauvais contact et améliorer la stabilité de l'assemblage de ces deux parties entre-elles. Le revêtement isolant 2, 2' qui ne s'étend qu'en partie vers le bas dans le pied de la coque du fait de sa hauteur par rapport à celle de la coque et de la présence d'un épaulement 24 à sa partie supérieure qui vient le bloquer sur le bord supérieur de la coque lorsqu'il est glissé par le haut dans la coque, comporte intérieurement, d'une part, une gorge 21 résultant de la présence de deux saillies parallèles et, d'autre part, une paroi de séparation 22 des conduites. La partie avant 2 du revêtement isolant intérieur comporte une ouverture ainsi que la face avant de la coque, lesdites ouvertures étant destinées à venir en coïncidence après insertion du revêtement isolant dans la coque et permettre l'accès à l'ensemble de comptage 9 au-dessus de la platine 3 à l'intérieur de la borne de comptage par l'intermédiaire d'une porte 4. La porte 4 comporte intérieurement une épaisseur 42 de matière isolante et extérieurement une paroi de porte 41. Un moyen de verrouillage 43 et un joint 44 complètent l'installation de la porte 4 dans les ouvertures avants précédemment signalées. Le fonctionnement en ouverture et fermeture de la porte en basculement est obtenu par une charnière virtuelle résultant des formes complémentaires des éléments concernés. En l'espèce une partie en U ouvert vers le bas est insérée sur le bord inférieur de l'ouverture de la coque et permet à la porte de prendre appui sur ce bord inférieur de l'ouverture de la coque. Dans une variante non représentée, une cordelette tendue entre la porte et la coque ou le revêtement intérieur permet de limiter l'ouverture de la porte, voire la retenir en l'air lorsqu'elle est démontée. Des bagues 34 sensiblement coniques permettent la fixation des conduites 8 dans et à travers la platine 3. Le sommet de la borne est fermé, en plus de l'isolant qui est continu à cet endroit lorsque ses deux parties sont accolées, par un chapeau 15 de préférence collé (ou soudé ou clipsé ou encliquetée) sur la coque 1 et, éventuellement, le revêtement isolant 2, 2'. Ce dernier 2, 2' peut également être collé (ou autre moyen équivalent) si nécessaire à la coque 1 tout comme l'épaisseur 42 de matière isolante peut l'être à la paroi de porte 41. Plus généralement on met en oeuvre des moyens de fixation (collage, soudage, clipsage, encliquetage...) des éléments entre-eux si cela est nécessaire à la cohésion du boîtier de l'invention.

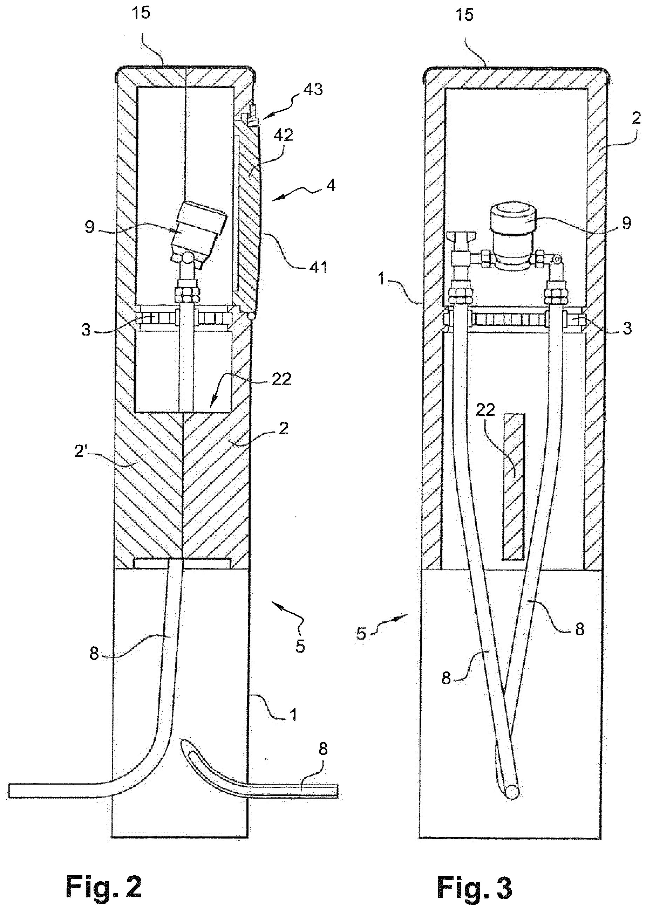

Sur les Figures 2 et 3 on voit mieux les relations entre les éléments décrits ci-dessus lorsque la borne de comptage est montée. En particulier on peut remarquer que l'épaisseur du revêtement isolant est sensiblement constante (à l'exception des saillies définissant la gorge 21) le long de la coque (même au niveau de la platine) et donc que l'isolation est de qualité.

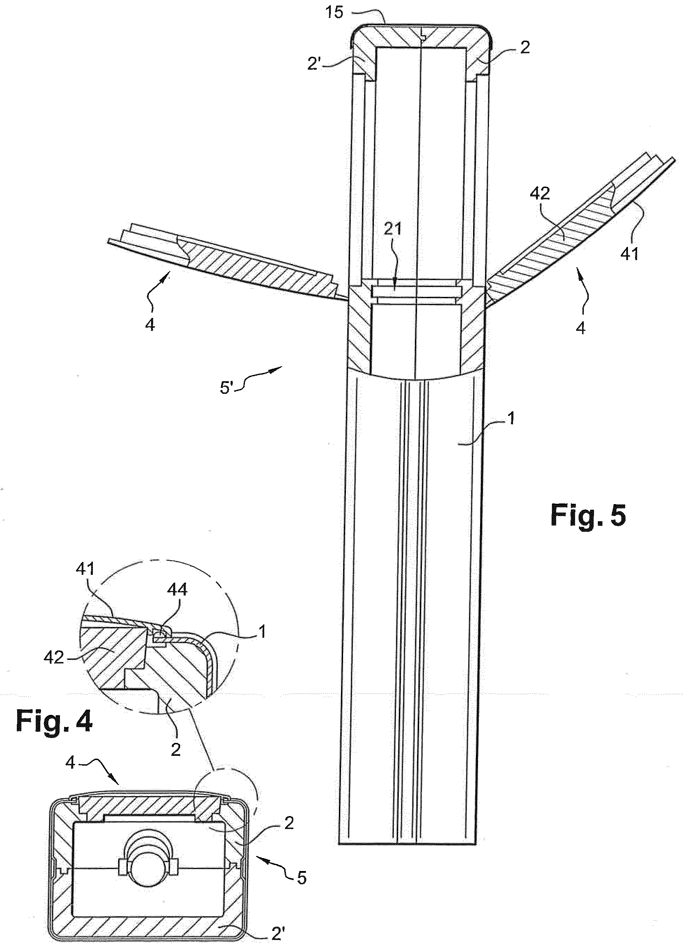

La Figure 4 détaille les relations entre la porte et le reste de la borne de comptage avec en particulier le joint 44.

La Figure 5 donne une variante 5' à deux portes de la borne de comptage précédente.

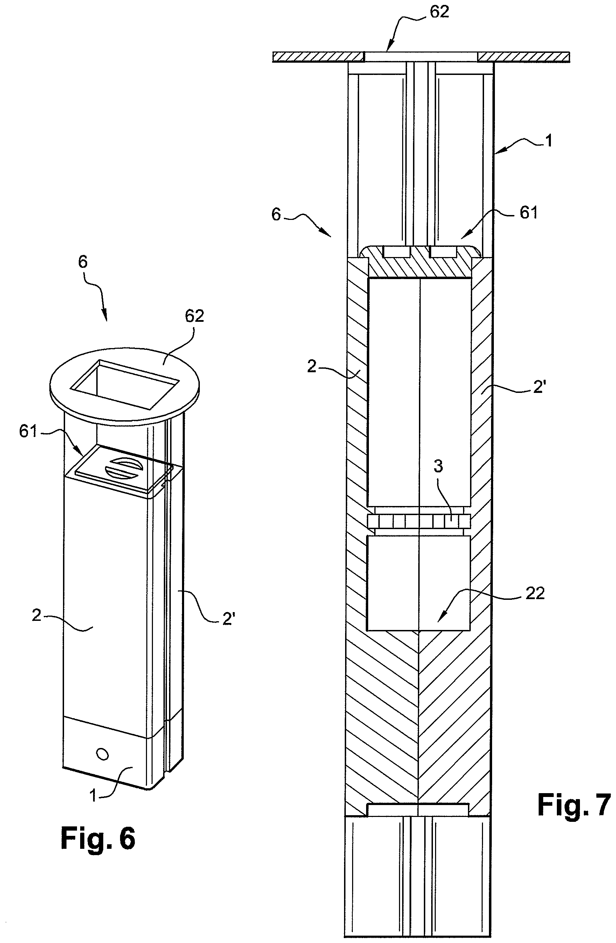

Les Figures 6 et 7 concernent le mode de réalisation regard de comptage 6 qui est destiné à être enterré totalement, l'accès à l'ensemble de comptage se faisant par le dessus. La coque 1 comporte intérieurement le revêtement isolant en deux parties 2 et 2' accolées qui comporte intérieurement la gorge destinée à maintenir la platine 3. De préférence, le revêtement est collé (ou autre moyen équivalent) à sa place dans la coque. Dans cet exemple de regard, deux trappes d'accès sont mises en oeuvre. Une trappe externe 62 sur un chapeau étendu fermant le haut de la coque et destiné à venir en affleurement à la surface du sol et une trappe interne 61, à la partie supérieure du revêtement isolant et de préférence dans la même matière. Sur la Figure 6, la coque 1 est rendue transparente ainsi que la trappe 62 pour faciliter la compréhension. Par rapport à la borne, la structure générale de la coque 1 extrudée reste identique ainsi que le revêtement isolant en deux parties (une ouverture est toutefois présente à sa partie supérieure).

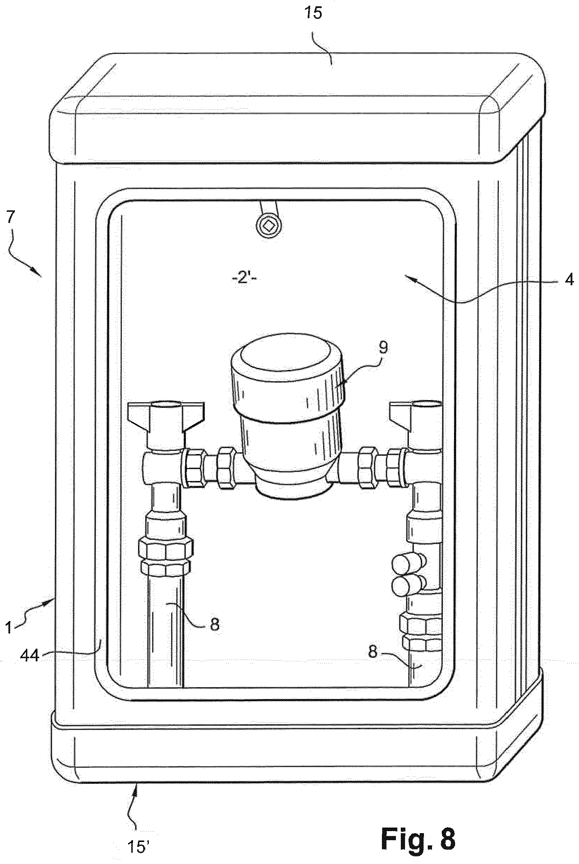

La Figure 8 concerne le mode de réalisation coffret 7 de comptage et la porte est représentée transparente pour faciliter la compréhension. On comprend que les moyens précédemment indiqués y sont mis en oeuvre d'une manière équivalente et adaptée à la présente structure. En particulier le boîtier de l'invention est plus petit car sans pied et un fond 15' ferme ici la partie inférieure de la coque. De préférence, le revêtement isolant intérieur est continu sur toutes ses faces à l'exception de l'ouverture de porte et des passages des conduites. Un épaulement à la partie supérieure des deux parties du revêtement intérieur peut être mis en oeuvre comme dans la borne de comptage afin de bloquer en place ledit revêtement lorsqu'il est glissé dans la coque. Selon le sens de glissement du revêtement intérieur isolant dans la coque (par le bas ou par le haut) l'épaulement est en bas ou en haut dudit revêtement.

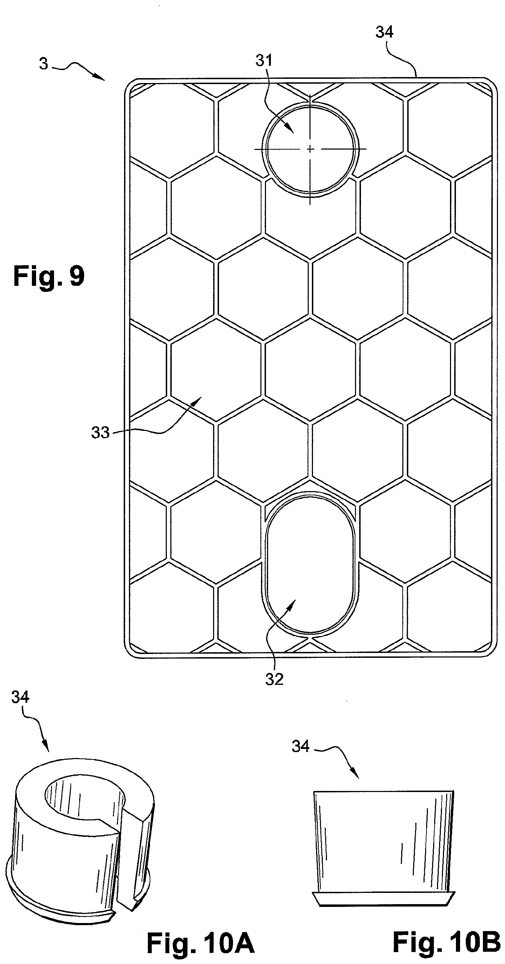

La Figure 9 donne une vue de dessus (ou dessous, la platine étant une structure essentiellement ouverte entre ses deux faces principales) de la platine 3 avec sa structure alvéolaire en nid d'abeille 33 et sa périphérie 34 continue destinée à venir dans la gorge du revêtement interne isolant. Des ouvertures 31 et 32 de passage de conduites de dimension supérieure à celle de la conduite correspondante sont réalisées. La conduite est maintenue en place grâce à une bague ouverte légèrement conique comme représentée Figures 10A et 10B qui est glissée sur la conduite et enfoncée dans l'ouverture 31 ou 32 correspondante ce qui provoque son serrage sur la conduite et l'immobilisation de cette dernière dans la platine 3.

On comprend que l'invention peut être déclinée de nombreuses manières sans pour autant sortir du cadre général défini par les revendications. Par exemple, dans une variante, le revêtement comporte plusieurs gorges étagées afin de permettre un choix de position en hauteur de la platine.

## Revendications

1. Boîtier pour ensemble de comptage d'adduction d'eau, l'ensemble de comptage étant destiné à être relié en amont à une conduite amont arrivant dans le boîtier et en aval à une conduite aval repartant du boîtier, les conduites arrivant et repartant par l'extrémité inférieure du boîtier, le boîtier étant constitué d'une coque (1) externe tubulaire obtenue par extrusion d'une matière plastique et d'un revêtement (2, 2') isolant interne sensiblement rigide en matière isolante, plaqué contre la coque et en deux parties accolées et glissées dans ladite coque, l'ensemble de comptage et les conduites pouvant être maintenus entre eux par fixation sur une platine (3) rigide immobilisée dans le boîtier,
**caractérisé en ce que** la coque (1) externe tubulaire est d'une pièce et **en ce que** ladite platine est maintenue en place dans l'isolant du boîtier par insertion de sa tranche périphérique dans une gorge (21) étendue sur les deux parties du revêtement isolant vers l'intérieur du boîtier.

2. Boîtier selon la revendication 1, **caractérisé en ce que** la gorge est formée par l'espace en retrait entre deux saillies internes parallèles du revêtement isolant.

3. Boîtier selon la revendication 2, **caractérisé en ce que** l'épaisseur de l'isolant au niveau de la gorge est sensiblement identique à celle de l'isolant en dehors des saillies le long de la coque.

4. Boîtier selon l'une quelconque des revendications précédentes, **caractérisé en ce que** la platine est une structure en nid d'abeille (33) dans une matière plastique injectée et **en ce qu'**elle comporte au moins deux orifices sensiblement verticaux pour passage des conduites.

5. Boîtier selon la revendication 4, **caractérisé en ce que** la conduite est fixée à la platine par enfoncement dans le passage correspondant d'une bague conique (34) enserrant la conduite.

6. Boîtier selon l'une quelconque des revendications précédentes, **caractérisé en ce qu'**il est un coffret (7) hors sol, l'extrémité inférieure du boîtier étant fermée par un fond (15') rapporté, le revêtement isolant des deux parties accolées étant étendu sur l'ensemble du fond.

7. Boîtier selon l'une quelconque des revendications 1 à 5, **caractérisé en ce qu'**il est une borne (5) de comptage et le boîtier se poursuit vers le bas par un pied destiné à venir dans le sol, la coque étant allongée vers le bas pour former ledit pied et le revêtement interne se poursuivant au moins en partie dans ledit pied.

8. Boîtier selon la revendication 6 ou 7, **caractérisé en ce que** l'accès à l'intérieur du boîtier se fait latéralement, l'extrémité supérieure du boîtier étant fermée par un chapeau (15), le revêtement isolant des deux parties accolées étant étendu sous l'ensemble du chapeau, au moins une ouverture étant réalisée sur une face latérale dudit boîtier, ladite ouverture étant fermée par une porte (4) amovible comportant intérieurement une épaisseur de matière isolante et extérieurement une paroi de porte.

9. Boîtier selon la revendication 8, **caractérisé en ce que** la partie supérieure de chacune des deux parties du revêtement isolant comporte un épaulement (24) périphérique destiné à venir buter contre le pourtour supérieur de la coque et bloquer l'insertion dudit revêtement isolant dans ladite coque dans une position déterminée.

10. Boîtier selon l'une quelconque des revendications 1 à 5, **caractérisé en ce qu'**il est un regard (6) de comptage destiné à être enterré et le boîtier se poursuit vers le bas par un pied, la coque étant allongée vers le bas pour former ledit pied et le revêtement interne se poursuivant au moins en partie dans ledit pied, et **en ce que** l'accès à l'intérieur du boîtier regard de comptage se fait par le dessus, une première trappe (62) amovible étant disposée à l'extrémité supérieure de la coque et une seconde trappe (61) amovible réalisée dans la matière isolante, la première et la seconde trappes étant séparées par un espace.

## Patentansprüche

1. Gehäuse für Zählereinheit der Wasserzuführung, wobei die Zählereinheit dazu bestimmt ist, in Wasserflußrichtung davor mit einer in Wasserflußrichtung davor liegenden, im Gehäuse ankommenden Leitung und in Wasserflußrichtung danach mit einer in Wasserflußrichtung danach liegenden, vom Gehäuse abgehenden Leitung verbunden zu werden, wobei die Leitungen am unteren Ende des Gehäuses ankommen bzw. abgehen, wobei das Gehäuse aus einer rohrförmigen äußeren, durch Spritzguß aus einem Plastikmaterial erhaltenen Schale (1) und einer isolierenden inneren, im Wesentlichen steifen, an die Schale angedrückten und aus zwei aneinander liegenden und in die Schale geschobenen Teilen gebildeten Beschichtung (2, 2') aus einem isolierenden Material besteht, wobei die Zählereinheit und die Leitungen durch Befestigung auf einer im Gehäuse festgelegten steifen Platine (3) zueinander festgehalten sein können,
**dadurch gekennzeichnet, daß** die rohrförmige äußere Schale (1) aus einem Stück besteht und daß die Platine im Isoliermaterial des Gehäuses dadurch am Platz gehalten wird, daß ihre Umfangskante in eine sich auf beiden Teilen der isolierenden Beschichtung ins Innere des Gehäuses erstreckende Hohlkehle (21) eingeschoben ist.

2. Gehäuse gemäß Anspruch 1, **dadurch gekennzeichnet, daß** die Hohlkehle durch den zurückspringenden Raum zwischen zwei parallelen inneren Erhebungen der isolierenden Beschichtung gebildet ist.

3. Gehäuse gemäß Anspruch 2, **dadurch gekennzeichnet, daß** die Dicke des Isoliermaterials im Bereich der Hohlkehle im Wesentlichen mit der des Isoliermaterials außerhalb der Erhebungen entlang der Schale identisch ist.

4. Gehäuse gemäß einem der vorangehenden Ansprüche, **dadurch gekennzeichnet, daß** die Platine eine durch Spritzguß aus einem Plastikmaterial erhaltene Bienenwabenstruktur (33) ist und daß sie wenigstens zwei im Wesentlichen senkrechte Löcher zum Durchrühren der Leitungen aufweist.

5. Gehäuse gemäß Anspruch 4, **dadurch gekennzeichnet, daß** die Leitung durch Eindrücken in den entsprechenden Durchlaß eines die Leitung umschließenden konischen Rings (34) an der Platine befestigt ist.

6. Gehäuse gemäß einem der vorangehenden Ansprüche, **dadurch gekennzeichnet, daß** es ein außerhalb des Erdbodens liegender Kasten (7) ist, wobei das untere Ende des Gehäuses durch einen eingesetzten Boden (15') gebildet ist, wobei sich sie isolierende Beschichtung der beiden aneinander liegenden Teile über die Gesamtheit des Bodens erstreckt.

7. Gehäuse gemäß einem der Ansprüche 1 bis 5, **dadurch gekennzeichnet, daß** es eine Zählersäule (5) ist und daß sich das Gehäuse nach unten durch einen Fuß fortsetzt, der dazu bestimmt ist, in den Erdboden eingebracht zu werden, wobei die Schale nach unten verlängert ist, um den Fuß zu bilden, und sich die innere Beschichtung wenigstens teilweise im Fuß fortsetzt.

8. Gehäuse gemäß Anspruch 6 oder 7, **dadurch gekennzeichnet, daß** der Zugang zum Inneren des Gehäuses seitlich erfolgt, wobei das obere Ende des Gehäuses mit einem Hut (15) verschlossen ist, wobei sich die isolierende Beschichtung der beiden aneinander liegenden Teile über den gesamten Hut erstreckt, wobei wenigstens eine Öffnung an einer seitlichen Seite des Gehäuses gebildet ist, wobei die Öffnung mit einer abnehmbaren Tür (4) verschlossen ist, die innen eine Schichtdicke Isoliermaterial und außen eine Türwandung aufweist.

9. Gehäuse gemäß Anspruch 8, **dadurch gekennzeichnet, daß** der obere Teil jedes der beiden Teile der isolierenden Beschichtung eine umlaufende Schulter (24) aufweist, die dazu bestimmt ist, gegen den oberen Umfang der Schale zu stoßen und das Einschieben der isolierenden Beschichtung in die Schale in einer bestimmten Position zu blockieren.

10. Gehäuse gemäß einem er Ansprüche 1 bis 5, **dadurch gekennzeichnet, daß** es ein Zählerkasten (6) ist, der dazu bestimmt ist, vergraben zu sein, und daß sich das Gehäuse nach unten durch einen Fuß fortsetzt, wobei die Schale nach unten verlängert ist, um den Fuß zu bilden, und sich die innere Beschichtung wenigstens teilweise im Fuß fortsetzt, und dadurch, daß der Zugang zum Inneren des Gehäuses als Zählerkasten von oben her erfolgt, wobei eine abnehmbare erste Klappe (62) am oberen Ende der Schale angeordnet ist und eine abnehmbare zweite Klappe (61) im Isoliermaterial ausgebildet ist, wobei die erste und die zweite Klappe durch einen Zwischenraum voneinander getrennt sind.

## Claims

1. An enclosure for a water supply metering unit, the metering unit being intended to be connected, upstream, to an upstream duct arriving to the enclosure and, downstream, to a downstream duct exiting from the enclosure, wherein the ducts arrive and exit at the lower end of the enclosure, the enclosure being consisted of a tubular external shell (1) obtained by extrusion of a plastic material and an internal, substantially rigid insulating coating (2, 2') made of an insulating material, applied against the shell and made-up of two parts placed side by side and slipped within said shell, wherein the metering unit and the ducts can be held to each other by fixation onto a rigid plate (3) immobilized in the enclosure,
**characterized in that** the tubular external shell (1) is single-piece and **in that** said plate is held in place in the insulating material of the enclosure by insertion of its peripheral edge into a groove (21) extended over the two parts of the insulating coating towards the inside of the enclosure.

2. The enclosure according to claim 1, **characterized in that** the groove is formed by the space setting back between two parallel internal protrusions of the insulating coating.

3. The enclosure according to claim 2, **characterized in that** the thickness of the insulating material at the groove is substantially identical to that of the insulating material out of the protrusions along the shell.

4. The enclosure according to any one of the preceding claims, **characterized in that** the plate is a honeycomb structure (33) made of an injected plastic material and **in that** it includes at least two substantially vertical orifices for the passage of the ducts.

5. The enclosure according to claim 4, **characterized in that** the duct is fixed to the plate by fitting into the corresponding passage of a conical ring (34) clamping the duct.

6. The enclosure according to any one of the preceding claims, **characterized in that** it is an above-ground cabinet (7), the lower end of the enclosure being closed by an added bottom (15'), the insulating coating of the two side-by-side parts being extended over the whole bottom.

7. The enclosure according to any one of claims 1 to 5, **characterized in that** it is a metering terminal (5) and the enclosure is continued downward by a foot intended to come into the ground, the shell being elongated downward to form said foot and the internal coating being continued at least partially within said foot.

8. The enclosure according to claim 6 or 7, **characterized in that** the access to the inside of the enclosure is made laterally, the upper end of the enclosure being closed by a cap (15), the insulating coating of the two side-by-side parts being extended under the whole cap, at least one opening being made in a lateral face of said enclosure, said opening being closed by a removable door (4) including internally a thickness of insulating material and externally a door wall.

9. The enclosure according to claim 8, **characterized in that** the upper portion of each of the two parts of the insulating coating includes a peripheral shoulder (24) intended to come in abutment against the upper perimeter of the shell and to block the insertion of said insulating coating into said shell at a determined position.

10. The enclosure according to any one of claims 1 to 5, **characterized in that** it is a metering manhole (6) intended to be buried and the enclosure is continued downward by a foot, the shell being elongated downward to form said foot and the internal coating being continued at least partially within said foot, and **in that** the access to the inside of the metering manhole enclosure is made by the top, a first removable trapdoor (62) being arranged at the upper end of the shell and a second removable trapdoor (61) made in the insulating material, the first and second trapdoors being separated by a space.
